# EUROPEAN PATENT APPLICATION

(11) **EP 4 509 748 A1**
(43) Date of publication of application: **19.02.2025**
(21) Application number: 23788190.9
(22) Date of filing: 03.04.2023
(51) Int. Cl.: F16L 33/22, F16L 21/00, F16L 37/12

(54) **PIPE JOINT**

(30) Priority: 15.04.2022 JP 2022067382
(71) Applicant: Toyox Co., Ltd., Kurobe-shi Toyama 938-8585 (JP)
(72) Inventor: SUGITA, Shuji, Kurobe-shi, Toyama 938-8585 (JP); SHIMIZU, Kazuki, Kurobe-shi, Toyama 938-8585 (JP)
(74) Representative: Perani & Partners S.p.A.
(86) International application number: PCT/JP2023/013769
(87) International publication number: WO 2023/199770

(57) **Abstract**

An object is to provide a hose joint capable of implementing sufficient water shut-off.

The hose joint includes a guide part provided in a nipple and provided to face an inner surface of a hose body having flexibility, a tightening member having a tapered surface provided to face an outer peripheral surface of the guide part and have a diameter which gradually becomes larger in an inserting direction of the hose body, a sleeve provided to be reciprocatable in each of the inserting direction of the hose body and an opposite hose pullout direction along the tightening member and be capable of elastic diameter expansion/contraction deformation in a radial direction, and an elastic member provided so as to press the sleeve in the hose pullout direction along the tapered surface, wherein the sleeve has a sleeve projection that bites into an outer surface of the hose body when a diameter of the sleeve is contracted, the guide part has a plurality of water shut-off members arranged from a far side to a rear side in the inserting direction of the hose body, and the sleeve projection is disposed above the water shut-off member on the far side in the inserting direction of the hose body when connection of the hose body is completed, while being disposed above the water shut-off member on the rear side in the inserting direction of the hose body when an internal pressure of the hose body is high.

## Description

### [Technical Field]

The present invention relates to a tool free hose joint that can easily be connected by merely inserting therein a deformable hose body, such as a hose or tube, having flexibility and formed of a material such as, e.g., synthetic resin or rubber.

### [Background Art]

This type of hose joint that can be connected by merely inserting therein a hose body is convenient, but the hose body may not be able to be inserted smoothly under a given resistance force. Consequently, due to such resistance forces, some workers may stop a pipe inserting operation midway, and insufficient inserting of the hose body may result in a hose body pullout accident or fluid leakage. Therefore, to prevent such a situation, a structure that allows the workers to sense an insufficiently inserted state of the hose body has been invented (see, e.g., PTL 1).

### [Citation List]

### [Patent Literature]

[PTL 1] Japanese Patent Application Publication No. 2018-3980

### [Summary of Invention]

### [Technical Problem]

The hose joint of PTL 1 has a structure that allows any worker who performs the hose body inserting operation to reliably ascertain that the hose body has been inserted to a prescribed position without depending on the experience of the worker or the like and can easily and reliably prevent the insufficient inserting of the hose body, and this allows the worker and a site manager to perform a hose body piping operation with security.

However, while the hose joint of PTL 1 allows the hose body to be reliably inserted to the prescribed position, once the inserting operation is completed, the hose body cannot be pulled out without destroying or disassembling the hose joint. At a hose body installation site, an emergency situation in which a length of a hose body turns out to be insufficient after installation thereof and the installed hose body has to be replaced with an appropriate hose body may occur and, even when such a situation does not occur, it is costly to inevitably destroy even a joint part having a longer service life despite the fact that a sleeve serving as a hose body retaining member is a consumable part that deteriorates over time and use, and needs to be replaced. In addition, even when the joint has an assembly/disassembly structure, considerable workload is still required. This has led the present inventors to propose a hose joint from which a sleeve extends to the outside and which allows even a hose body to be pulled out through operation of an extending part.

However, being able to pull out the hose body turns out to pose a challenge in terms of water shut-off, and coping with a water shut-off issue has become apparent as a new problem to be addressed. It is therefore an object of the present invention to provide a hose joint capable of implementing sufficient water shut-off.

### [Technical Problem to Be Solved]

The present invention pertaining to a hose joint for attaining such an object includes: a guide part provided in a nipple and provided to face an inner surface of a hose body having flexibility; a tightening member having a tapered surface provided to face an outer peripheral surface of the guide part and have a diameter which gradually becomes larger in an inserting direction of the hose body; a sleeve provided to be reciprocatable in each of the inserting direction of the hose body and an opposite hose pullout direction along the tightening member and be capable of elastic diameter expansion/contraction deformation in a radial direction; and an elastic member provided so as to press the sleeve in the hose pullout direction along the tapered surface, wherein the sleeve has a sleeve projection that bites into an outer surface of the hose body when a diameter of the sleeve is contracted, the guide part has a plurality of water shut-off members arranged from a far side to a rear side in the inserting direction of the hose body, the sleeve projection is disposed above the water shut-off member on the far side in the inserting direction of the hose body when connection of the hose body is completed, while being disposed above the water shut-off member on the rear side in the inserting direction of the hose body when an internal pressure of the hose body is high.

### [Brief Description of Drawings]

[Fig. 1]

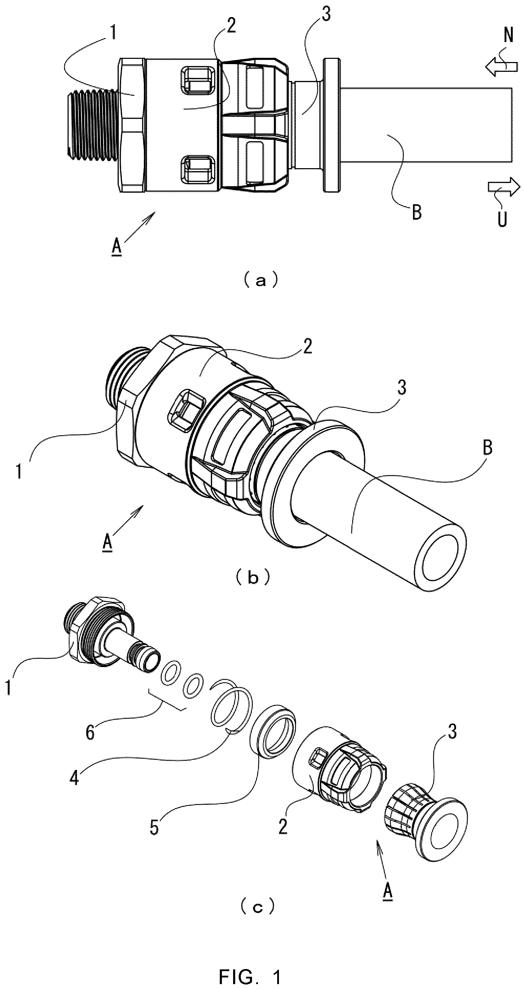

   Figs. 1 are diagrams each illustrating an overall configuration of a hose joint according to an embodiment of the present invention, in which Fig. 1(a) is a front view, Fig. 1(b) is a right perspective view, and Fig. 1(c) is a right perspective view when the hose joint is disassembled.
[Fig. 2]

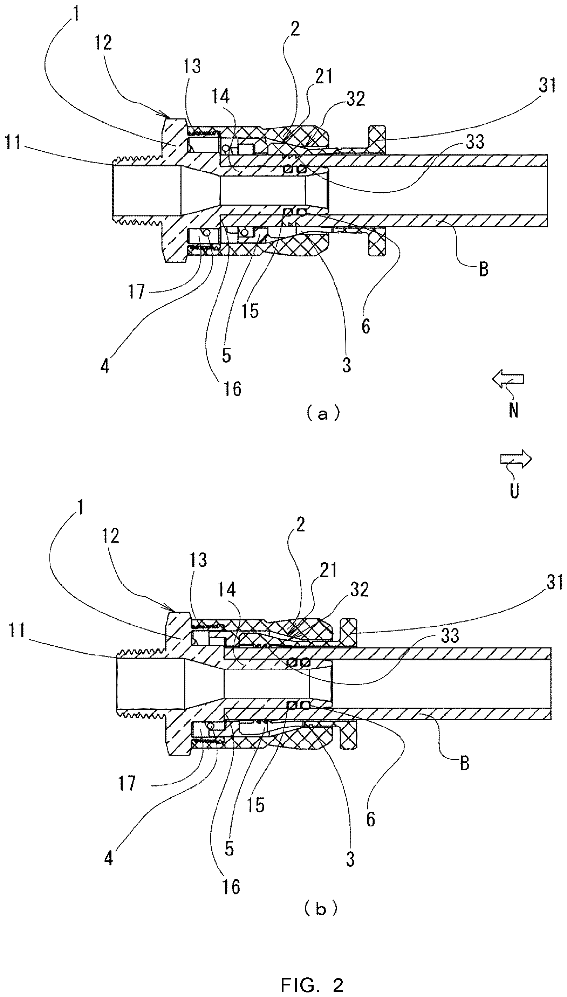

   Figs. 2 are longitudinal cross-sectional front views illustrating the overall configuration of the hose joint according to the embodiment of the present invention, in which Fig. 2(a) illustrates a sleeve having a contracted diameter when connection of a hose body is completed and Fig. 2(b) illustrates the sleeve having an expanded diameter as a result of push-in of the sleeve.
[Fig. 3]

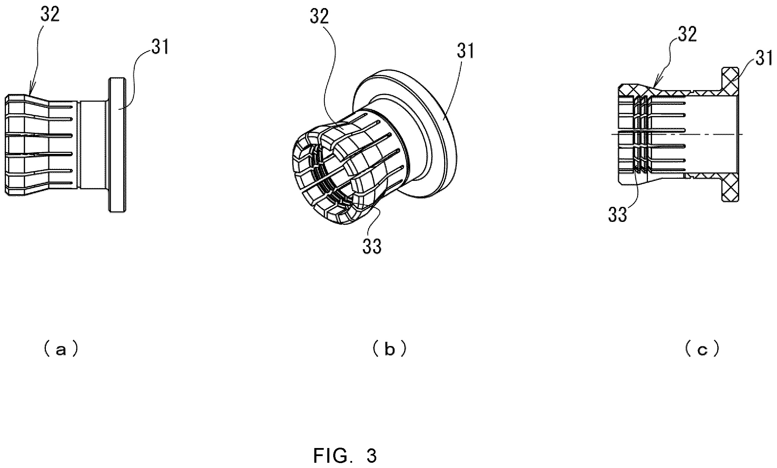

   Figs. 3 illustrate the sleeve to be used for the hose joint according to the embodiment of the present invention, in which Fig. 3(a) is a front view, Fig. 3(b) is a left perspective view, and Fig. 3(c) is a longitudinal cross-sectional front view.
[Fig. 4]

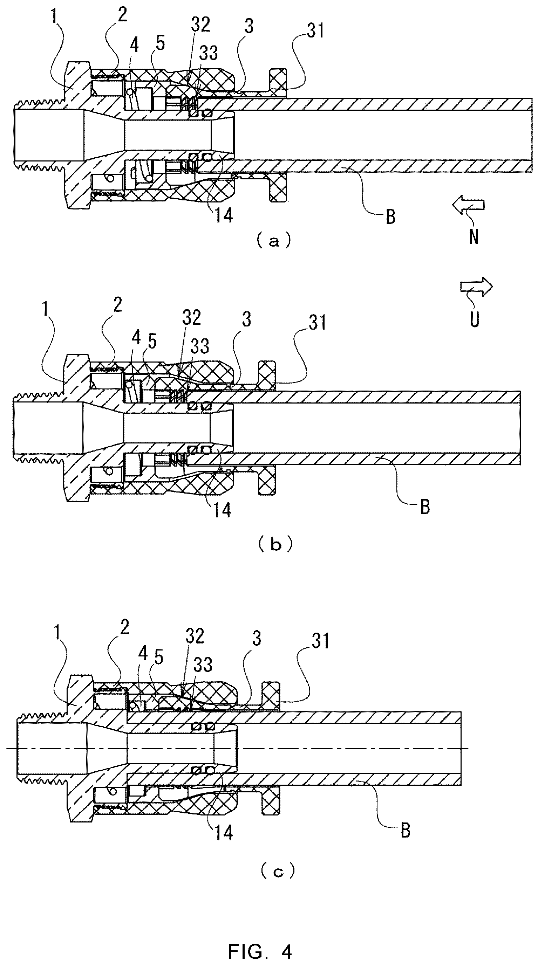

   Figs. 4 are longitudinal cross-sectional front views each illustrating the overall configuration of the hose joint according to the embodiment of the present invention, in which Fig. 4(a) illustrates a time when connection of the hose body is started, Fig. 4(b) illustrates a stage in the middle of a hose body connecting operation, and Fig. 4(c) illustrates a time immediately before the connection is completed at which the hose body has been pushed in to a hose butting part.
[Fig. 5]

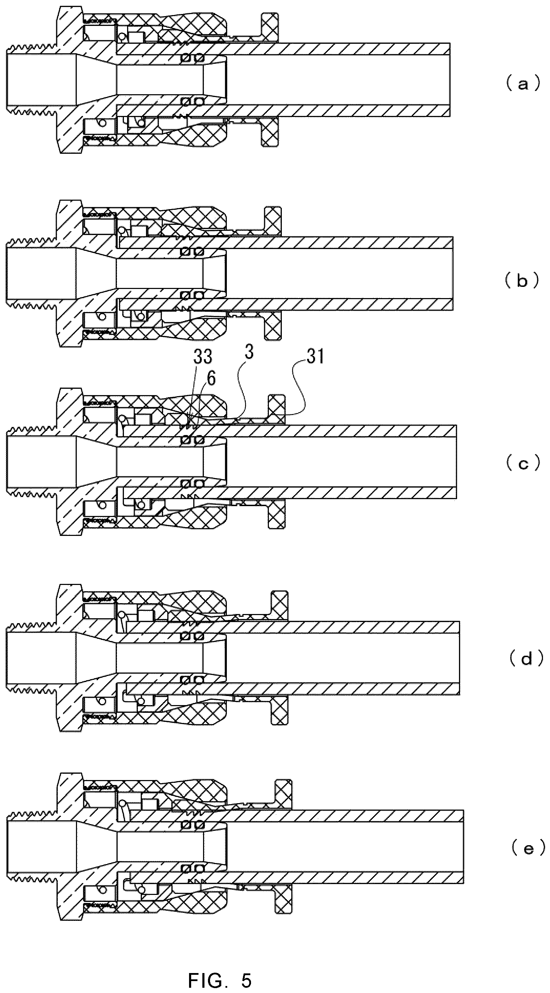

   Figs. 5 are longitudinal cross-sectional front views each illustrating the overall configuration of the hose joint according to the embodiment of the present invention, in which Fig. 5(a) illustrates a state where the hose body is connected and Figs. 5(b) to 5(e) illustrate a transition of the state when an inner pressure of the hose body gradually increases thereafter.
[Fig. 6]

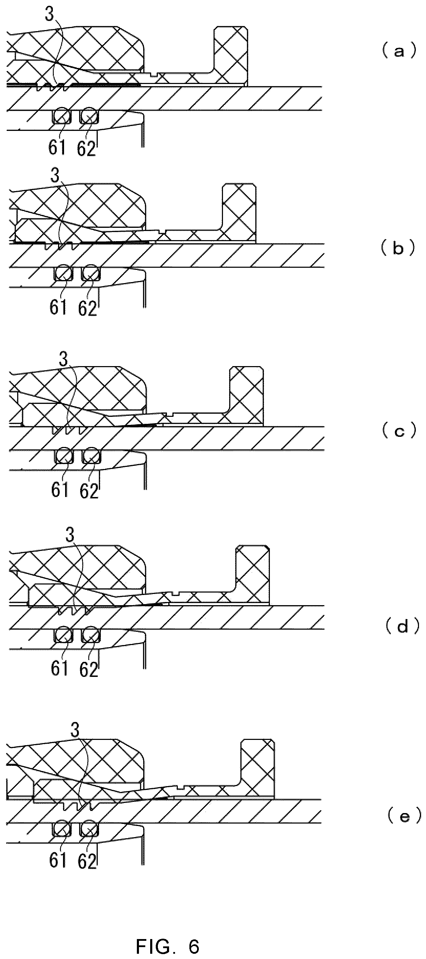

   Figs. 6 are partially enlarged views of Figs. 5, in which Fig. 6(a) illustrates a state where the hose body is connected and Figs. 6(b) to 6(e) illustrate a transition of the state where the inner pressure of the hose body gradually increases thereafter.
[Fig. 7]

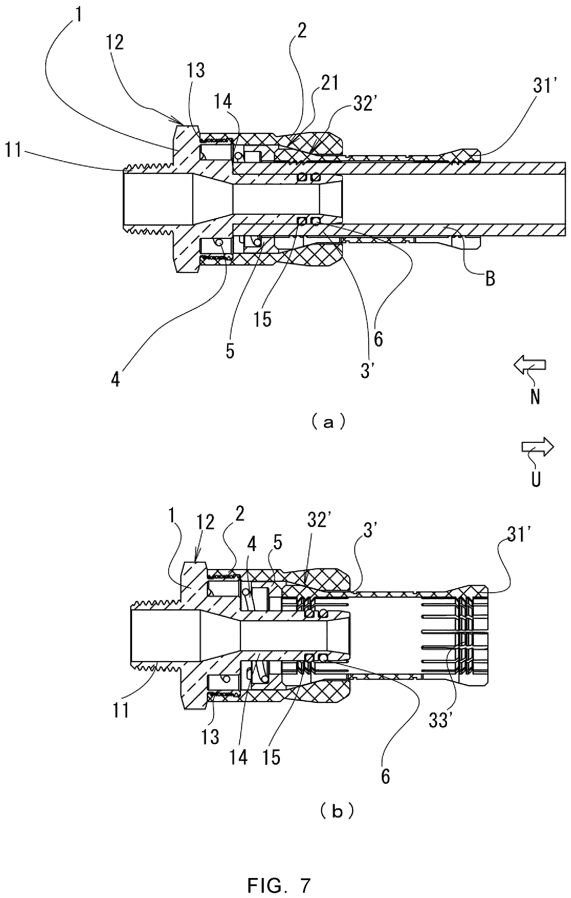

   Figs. 7 are longitudinal cross-sectional front views each illustrating an overall configuration of the hose joint according to another embodiment of the present invention, in which Fig. 7(a) illustrates the sleeve having a contracted diameter when connection of the hose body is completed and Fig. 7(b) illustrates a state where the hose body is not inserted.
[Fig. 8]

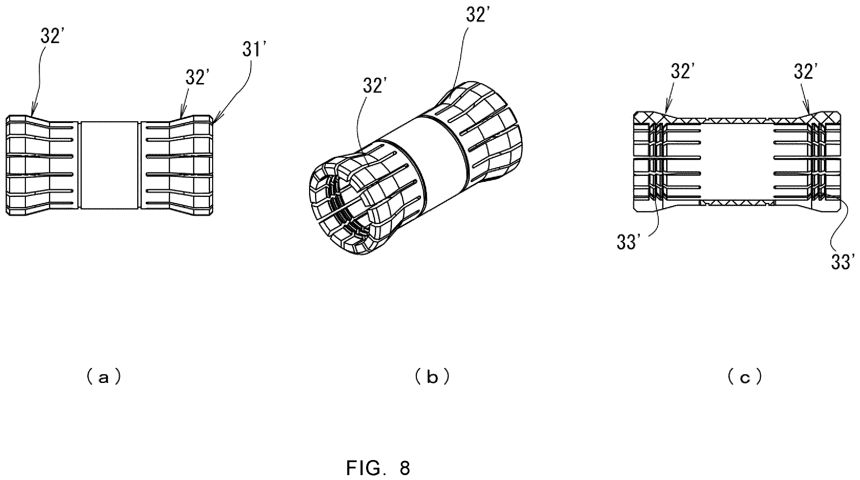

   Figs. 8 illustrate the sleeve to be used for the hose joint according to the other embodiment of the present invention, in which Fig. 8(a) is a front view, Fig. 8(b) is a left perspective view, and Fig. 8(c) is a longitudinal cross-sectional front view.

### [Description of Embodiments]

### (Embodiments of Present Invention)

The following will describe each of embodiments of the present invention in detail on the basis of the drawings.

As illustrated in Figs. 1 to Figs. 3, a hose joint A according to the embodiment of the present invention includes, as main components: a nipple 1 having a guide part 14 provided to face an inner surface of a hose body B; a nut 2 (tightening member) having a nut inner slope surface 21 (tapered surface) provided to face an outer peripheral surface of the guide part 14 and be inclined in an axial direction thereof; a sleeve 3 provided to be reciprocatable in each of an inserting direction of the hose body and an opposite hose pullout direction along the nut inner slope surface 21 of the nut 2 and be capable of elastic diameter expansion and contraction deformation in a radial direction; and a spring 4 provided so as to press the sleeve 3 in the hose pullout direction along the nut inner slope surface 21. Besides, the hose joint A also includes: a ring 5 serving as a spring retainer for the spring 4, and O-rings 6 for water shut-off.

Figs. 1 are diagrams each illustrating an overall configuration of the hose joint according to the embodiment of the present invention, in which Fig. 1(a) is a front view, Fig. 1(b) is a right perspective view, and Fig. 1(c) is a right perspective view when the hose joint is disassembled. Meanwhile, Figs. 2 are longitudinal cross-sectional front views each illustrating the overall configuration of the hose joint according to the embodiment of the present invention, in which Fig. 2(a) illustrates a sleeve having a contracted diameter when connection of the hose body is completed and Fig. 2(b) illustrates the sleeve having an expanded diameter as a result of push-in of the sleeve.

The nipple 1 is formed by performing press working or another molding process on a sheet material made of a rigid material such as, e.g., metal such as brass or a rigid synthetic resin or a deformable rigid material such as, e.g., stainless steel.

As illustrated in Figs. 1(b) and 1(c), with relation to the nipple 1 having the guide part 14, by screwing a male thread provided in an outer periphery of a cylindrical part 13 of the nipple 1 having a guide part 14 into a female thread provided in an inner periphery of the nut 2 (see also Fig. 2(a) in combination), the nut 2 is configured to be connected to the nipple 1 by being rotated with respect to the nipple 1. The nipple 1 is provided with a tool engaging part 12 having such as a hexagonal width across flat to be used when the nut 2 is screwed thereon. Before the nut 2 is connected to the nipple 1, the O-rings 6 are fitted and fixed in annular concave parts 15 formed in the guide part 14 to hold the nipple 1 unmovable in the axial direction, while the spring 4 and the ring 5 are disposed between the nipple 1 and the nut 2, and then the nut 2 is connected to the nipple 1. However, the sleeve 3 need not be assembled before the nipple 1 and the nut 2 are connected. In a conventional hose joint, it is required that, before a nipple and a nut are connected, a sleeve is also disposed therebetween and then a connecting operation is performed, i.e., the sleeve cannot be attached afterward. However, in the present invention, even after the nipple 1 and the nut 2 are connected, it is possible to attach the sleeve 3. In other words, while it is possible to attach the sleeve when the nipple 1 and the nut 2 are assembled in the same manner as conventionally, even after the assembly of the nipple 1 and the nut 2, by merely pressing the sleeve 3 from an opening part of the nut 2, the diameter of the sleeve 3 is contracted, and the sleeve 3 can be contained in the nut 2.

By inserting a connection end part of the hose body B into an insertion space formed between the guide part 14 and the sleeve 3, the sleeve 3 is temporarily moved in an inserting direction N of the hose body B against the spring 4 but, thereafter, the sleeve 3 is reversely moved in a hose pullout direction U opposite to the hose inserting direction N, and the connection end part of the hose body B is held between the guide part 14 and the sleeve 3 to be unextractably held in place and connected. Fig. 2(a) illustrates this state. Meanwhile, Fig. 2(b) illustrates that, by performing a pressing operation on a pressing part 31 included in the sleeve 3, the diameter of the sleeve 3 can be expanded in a state where the hose body B is connected, which is a major feature of the present invention. This state allows the hose body B to be easily pulled out.

Note that, in the present embodiment, the pressing part 31 is formed in a flange shape, but it may also be possible to provide an engaging part that can be engaged with a replacing operation jig, and engage the replacing operation jig prepared as a separate body when pressing is performed to allow pressing. What is important is that the sleeve 3 extends from the nut 2 in the hose pullout direction U opposite to the nipple 1.

The guide part 14 is formed integrally with the nipple 1 and formed of a rigid material such as metal such as, e.g., brass or a rigid synthetic resin into a cylindrical shape having an outer diameter substantially equal to or slightly smaller than an inner diameter of the hose body B or, alternatively, formed by performing press working or another molding process on a sheet material made of a deformable rigid material such as, e.g., stainless steel into a thin thickness of cylindrical shape having an outer diameter substantially equal to or slightly smaller than the inner diameter of the hose body B. However, it is also possible to form the nipple 1 and the guide part 14 as separate bodies and assemble the nipple 1 and the guide part 14 or use different materials for the nipple 1 and the guide part 14, e.g., form the nipple 1 of brass and form the guide part 14 of a resin.

In an outer peripheral surface of the guide part 14, the annular concave parts 15 are formed to face each of an inner surface of the hose body B and an inner peripheral surface of the sleeve 3 and extend in a circumferential direction, and the O-rings 6 are fitted and fixed into the annular concave parts 15 to hold the nipple 1 unmovable in the axial direction, while outer peripheral ends of the O-rings 6 are caused to slightly protrude from the outer peripheral surface of the guide part 14 and be in pressure contact against the inner surface of the hose body B.

In the illustrated example, the two annular concave parts 15 and the two O-rings 6 are arranged in the outer peripheral surface of the guide part 14 to be spaced apart from each other at predetermined intervals, and the entire outer peripheral surface except for the annular concave parts 15 are formed as a smooth surface in the hose inserting direction N.

Alternatively, in another example though not shown, it is also possible to arrange the O-rings 6 at predetermined intervals in the three or more pairs of annular concave parts 15 in the axial direction of the guide part 14.

On a far side of the guide part 14 in the hose inserting direction N, a hose butting part 16, which is a stepped part, is formed so as to allow completion of inserting to be recognized when the hose body B is inserted. On a farther side of the hose butting part 16 in the hose inserting direction N, a ring escaping part 17 (escaping part) serving as a space into which the ring 5 can retreat when the sleeve 3 is pushed in is formed.

The nut 2 is made of transparent or colored resin or metal, and a portion thereof in the axial direction is formed in a substantially cylindrical shape having an inner diameter larger than an outer diameter of the sleeve 3. By being screwed onto the nipple 1, the nut 2 is attached to the guide part 14 side to be unmovable in the axial direction thereof.

An inner peripheral surface of the nut 2 is formed with the nut inner slope surface 21 (tapered surface) serving as a tightening means for the sleeve 3 and inclined such that a diameter thereof gradually increases in the hose inserting direction N and gradually decreases in the hose pullout direction U.

A nut of the conventional hose joint has a regulating part which is formed in the inner peripheral surface thereof on a front end side in the hose pullout direction U to face the sleeve so as to prevent the sleeve from moving in the hose pullout direction U. Accordingly, after the nipple and the nut were connected, it was impossible to attach the sleeve and also detach the attached sleeve without destroying or disassembling the hose joint but, in the embodiment of the present invention, it is possible to attach and detach the sleeve 3. It will easily be understood from a material and a structure of the sleeve 3 described later that the sleeve 3 can easily be attached and detached in a situation in which the hose body B is not present in Fig. 2(b).

Figs. 3 illustrate the sleeve to be used for the hose joint according to the embodiment of the present invention, in which Fig. 3(a) is a front view, Fig. 3(b) is a left perspective view, and Fig. 3(c) is a longitudinal cross-sectional front view.

The sleeve 3 is formed of an elastically deformable material such as, e.g., polyacetal resin or another synthetic resin having excellent surface slipperiness, toughness, and heat resistance into a substantially cylindrical shape capable of diameter expansion and contraction deformation in the radial direction, and an inner diameter thereof is set to be substantially equal to or larger than an outer diameter of the hose body B when the diameter is expanded and be smaller than the outer diameter of the hose body B when the diameter is contracted.

In addition, the sleeve 3 is supported to be reciprocatable in the hose inserting direction N and the hose pullout direction U along the outer peripheral surface of the guide part 14 and the nut inner slope surface 21 of the nut 2.

The inner peripheral surface of the sleeve 3 has sleeve projections 33 formed in annular or nearly annular states to protrude toward the outer peripheral surface of the guide part 14 in the circumferential direction.

The sleeve projections 33 are disposed so as to face and butt against a front end surface of the connection end part of the hose body B in the hose inserting direction N when the hose body B is inserted, while being formed such that the inner ends thereof are subjected to diameter contraction deformation to have diameters smaller than the outer diameter of the hose body B toward the outer surface of the connection end part with movement in the hose pullout direction U.

The number of the sleeve projections 33 is such that the plurality of sleeve projections 33 are preferably arranged in the hose inserting direction N. In an example illustrated in Figs. 2, at the inner peripheral surface of the sleeve 3, the three sleeve projections 33 are integrally molded to be spaced apart from each other at predetermined intervals. These three sleeve projections 33 are preferably placed in positional relationships such that the sleeve projections 33 are disposed above the far-side O-ring 6 in the hose inserting direction N in a state where the connection of the hose body B is completed illustrated in Fig. 2(a).

The sleeve 3 further has, at an outer peripheral surface thereof: a sleeve slope surface 32 formed to face the nut inner slope surface 21 of the nut 2; and an elastically deforming part that causes elastic diameter expansion and contraction deformation of the sleeve projections 33 and the sleeve slope surface 32 in a radial direction of the sleeve 3.

The sleeve slope surface 32 is formed so as to be substantially parallel with the nut inner slope surface 21 of the nut 2 in an annular or nearly annular state in the circumferential direction along the outer peripheral surface of the sleeve 3. Size settings are made such that, in a state where the sleeve slope surface 32 is not in contact with the nut inner slope surface 21, a maximum diameter portion of the sleeve slope surface 32 has a diameter equal to or slightly smaller than that of a maximum diameter portion of the nut inner slope surface 21, while the sleeve slope surface 32 is placed in a positional relationship such that in a contact state, due to a portion of the nut inner slope surface 21 having a smaller diameter, diameter contraction of the sleeve slope surface 32 cannot be avoided. In other words, the sleeve slope surface 32 is configured so as to be constantly elastically in pressure contact against the nut inner slope surface 21.

More specifically, the sleeve slope surface 32 is disposed so as to be temporarily moved in the hose inserting direction N along the nut inner slope surface 21 as a result of butting of the sleeve projections 33 against the front end surface of the hose body B and then reversely moved by the spring 4 in the hose pullout direction U.

The elastically deforming part is configured to be easily elastically deformed in the radial direction by cutting and forming a slot, a dent, or the like in a part of the sleeve 3 in the axial direction and configured such that the sleeve slope surface 32 moves in the hose inserting direction N, while being in contact with the nut inner slope surface 21, to be subjected to smooth diameter expansion deformation, and the sleeve slope surface 32 moves in the hose pullout direction U, while being in contact with the nut inner slope surface 21, to be subjected to smooth diameter contraction deformation.

In the illustrated example, the sleeve slope surface 32 is formed to protrude from a portion of the sleeve 3 in the axial direction, specifically a middle position in the axial direction to the far-side end part thereof in the hose inserting direction N, while a plurality of slots (slits) are formed in the circumferential direction to linearly extend longer than the sleeve slope surface 32 in the axial direction.

The three sleeve projections 33 are shaped to protrude in a vertical direction in the diagram on the far side in the hose inserting direction N, while being shaped as 45-degree tapered surfaces on the rear side in the hose inserting direction N.

Consequently, when the insertion of the hose body B is started, an outer peripheral edge of the front end surface of the hose body B comes into contact with the 45-degree tapered surfaces of the sleeve projections 33 to push-in the sleeve 3 in the hose inserting direction N, but the sleeve projections 33 are formed such that, as a result of removal of the contact between the sleeve slope surface 32 and the nut inner slope surface 21, the outer peripheral edge of the front end surface of the hose body B passes, while pushing up the sleeve projections 33, as a result of the diameter expansion deformation of the sleeve projections 33, and the hose body B is pushed in to a prescribed position and then, when the sleeve 3 is moved reversely in the hose pullout direction U by the spring 4, inner ends of the sleeve projections 33 reliably bite into the outer surface of the hose body B as a result of the diameter contraction deformation of the sleeve projections 33.

The spring 4 is an elastic body formed to be capable of elastic expansion and contraction deformation in at least one direction such as, e.g., a coil spring or a spring, which is disposed to be capable of expansion and contraction deformation in each of the hose inserting direction N and the hose pullout direction U to constantly elastically press the sleeve 3 in the hose pullout direction U.

In the illustrated example, between a spring butting part on the far side of a space formed by the cylindrical part 13 and the guide part 14 of the nipple 1 in the hose inserting direction N and the ring 5 serving as a spring retainer disposed on a rear side in the hose inserting direction N in the sleeve 3, the coil spring is interposed as the spring 4 such that a pressing force of the coil spring uniformly acts on the sleeve 3 in the circumferential direction. The ring 5 functions as the spring retainer, has a given thickness in the hose inserting direction, and is in gapless contact with an inner face of the nut 2, and consequently reciprocates while keeping a completely parallel state with the nipple 1. As a result, the sleeve 3 also reciprocates while keeping a completely parallel state with the nipple 1, and therefore there is no inclination of the sleeve 3.

Meanwhile, the hose body B is formed by molding a material having flexibility such as a synthetic resin such as, e.g., vinyl chloride, silicone rubber, or another rubber, which is a hose, a tube, or the like formed by molding, e.g., a soft material and preferably has a flat inner surface and a flat outer surface.

As a specific example of the hose body B, a hose having a single-layer structure is used in the illustrated example. In another example, it is also possible to use a laminated hose (braid hose) in which, between transparent or opaque outer and inner layers, a plurality of or a single braid (reinforcing thread) made of synthetic resin is embedded in a spiral shape as an intermediate layer, a spiral reinforced hose obtained by winding, as an intermediate layer, each of a belt-like reinforcing material made of synthetic resin or metal and having a rectangular cross section or the like and a linear reinforcing material having a circular cross section or the like into a spiral shape and integrated, or a spiral reinforced hose in which a wire rod made of metal or a wire rod made of rigid synthetic resin is embedded in a spiral shape, or the like, though not shown.

In the nipple 1, a connection part 11 to which another device (not shown), another hose body (not shown), or the like is to be connected is further provided, and the other device, the other hose body, or the like connected thereto is coupled to the hose body B which is to be connected to the outer peripheral surface of the guide part 14 via the nipple 1. Note that, by providing the guide part 14 on each of both ends instead of the connection part 11, it is also possible to cause the guide parts 14 to function as intermediate joints.

### (Hose Body Connecting Step)

A description will be given of a connecting step for the hose joint A according to the embodiment of the present invention. Figs. 4 are longitudinal cross-sectional front views each illustrating the overall configuration of the hose joint according to the embodiment of the present invention, in which Fig. 4(a) illustrates a time when the connection of the hose body is started, Fig. 4(b) illustrates a stage in the middle of a hose body connecting operation, and Fig. 4(c) illustrates a time immediately before the connection is completed at which the hose body has been pushed in to the hose butting part.

As illustrated in Fig. 4(a), by inserting the connection end part of the hose body B into the insertion space formed between the guide part 14 and the sleeve 3, the front end surface of the base body B first butts against the 45-degree tapered surfaces of the sleeve projections 33 of the sleeve 3 and, by pushing in the hose body B while maintaining the butting state, the sleeve slope surface 32 of the sleeve 3 slides along the nut inner slope surface 21 of the nut 2, and the entire sleeve 3 including the sleeve projections 33 moves in the hose inserting direction N against the pressing force of the spring 4. At this time, when a worker feels that the work is hard to perform, the worker may also use the pressing part 31 of the sleeve 3 to assist the push-in of the sleeve 3. In particular, when the worker feels strong resistance, the worker may appropriately push in the sleeve 3 with his or her hand. The reason for this is that, when the hose body B is inserted in a state where the sleeve projections 33 are located above the O-ring 6, due to the 45-degree tapered surfaces of the sleeve projections 33, the end part of the hose body B is brought into strong contact with the O-rings 6 when the hose body B slips inside the sleeve projections 33, and the O-ring 6 is turned up to cause fluid leakage.

Against this background, in the embodiment of the present invention, the tapered surfaces of the sleeve projections 33 are set at 45 degrees. When tapered angles of the sleeve projections 33 become larger than 45 degrees, the contact between the end part of the hose body B and the tapered surfaces of the sleeve projections 33 becomes strong, the hose body B is less likely to slip inside the projections 33, and the diameter of the sleeve 3 is not expanded, and therefore the inserting of the hose body B becomes difficult. When the taper angles of the sleeve projections 33 become smaller than 45 degrees, increased contact faces of the tapered surfaces of the sleeve projections 33 increase a force to press the hose body B inside the sleeve projections 33, and consequently the end part of the hose body B is brought into strong contact with the O-rings 6 and the O-rings 6 are easily turned up. The 45-degree tapered surfaces of the sleeve projections 33 are set at a well-balanced angle when the sleeve 3 is pushed in by the hose body B and the end part of the hose body B slips inside the sleeve projections 33 by using the tapered surfaces of the sleeve projections 33 to expand the diameter of the sleeve 3 in the radial direction. However, depending on the material of the hose body B or the strength of the O-rings 6, it is not impossible to push in the sleeve 3 and expand the diameter of the sleeve 3 even when the taper angles are set different, and 45 degrees are set only for the present embodiment.

When the hose body B is inserted without turning up the O-rings 6, as illustrated in Fig. 4(b), the sleeve slope surface 32 of the sleeve 3 is pushed in the hose inserting direction N along the nut inner slope surface 21, and consequently the diameter of the sleeve 3 is expanded by elasticity thereof, and the sleeve slope surface 32 and the sleeve projections 33 are also subjected to gradual diameter expansion deformation. Then, when the inner diameter of the front end thereof increases to be larger than the outer diameter of the front end of the hose body B as a result of the diameter expansion deformation of the sleeve projections 33, the front end surface of the hose body B leaves the 45-degree tapered surfaces of the sleeve projections 33. As a result, spring elasticity of the spring 4 pushes back the sleeve 3 in a direction opposite to the inserting direction N of the hose body B, and therefore the end part of the hose body B slides over the 45-degree tapered surfaces of the sleeve projections 33 and the hose body B passes inside the projections of the sleeve 3 to be inserted until the hose body B reaches the hose butting part 16 of the nipple 1, as illustrated in Fig. 4(c).

Meanwhile, when the insertion of the hose body B is completed and a frictional force in the hose inserting direction N is removed, the sleeve 3 is swiftly pressed in the hose pullout direction U by the elasticity of the spring 4, the sleeve 3 is resultantly subjected to sudden diameter contraction deformation to cause the inner ends of the sleeve projections 33 to bite into the outer surface of the hose body B, and the hose body B is held between the outer peripheral surface of the guide part 14 and the sleeve 3 to be unmovable in the hose pullout direction U (see Fig. 2(a)).

Thus, by a mere operation of inserting the hose body B, it is possible to reliably and smoothly complete tool free and unextractable connection with a single touch.

### (Hose Body Removing Step)

Next, a description will be given of a removing step for the hose joint A according to the embodiment of the present invention. In the conventional hose joint, the sleeve is completely contained in the nut, and therefore the sleeve cannot be pushed in in the hose inserting direction N. However, in the hose joint A according to the embodiment of the present invention, the sleeve 3 has the extending part extending from the nut 2 in the hose pullout direction U opposite to the nipple 1 and the extending part has a flange functioning also as the pressing part 31 and therefore, even in a state where the connection of the hose body B is completed, the sleeve 3 can be pushed in in the hose inserting direction N. Fig. 2(b) illustrates a state where the sleeve 3 has been pushed in. Since the ring 5 is allowed to enter the ring escaping part 17 of the nipple 1, the sleeve 3 can be pushed in further on the far side in the hose inserting direction N. The diameter of the sleeve 3 is expanded, and the sleeve projections 33 have not bitten into the hose body B. When the hose body B is pulled while the sleeve 3 is continuously pushed in, resistance exerted by the sleeve projections 33 is not so high, and therefore the hose body B can easily be pulled out.

### (Water Shut-off Structure)

A description will be given of a water shut-off structure of the hose joint A according to the embodiment of the present invention. Figs. 5 are longitudinal cross-sectional front views each illustrating the overall configuration of the hose joint according to the embodiment of the present invention, in which Fig. 5(a) illustrates a state where the hose body is connected and Fig. 5(b) to Fig. 5(e) illustrate a transition of the state when an inner pressure of the hose body gradually increases thereafter. Figs. 6 are partially enlarged views of Figs. 5, specifically views of portions illustrating a positional relationship between the sleeve projections 33 and the O-rings 6, in which Fig. 6(a) illustrates a state where the hose body is connected and Figs. 6(b) to 6(e) illustrate a transition of the state where the inner pressure of the hose body gradually increases thereafter. Note that, in Figs. 6 as the partially enlarged views, the O-rings 6 are separated into the far-side one and the rear-side one in the inserting direction of the hose body and respectively illustrated as an O-ring 61 and an O-ring 62.

In the hose joint A according to the embodiment of the present invention, the water shut-off structure is also improved. In the hose joint shown in PTL 1, a situation is encountered in which the sleeve moves while tilting, and the hose body and the O-rings cannot appropriately be compressed to result in insufficient water shut-off. The hose joint A according to the embodiment of the present invention is designed so as not to cause such a situation. The description will be given using Figs. 5 and Figs. 6.

As illustrated in Fig. 6(a), after the insertion of the hose body B, the sleeve projections 33 are located above the far-side O-ring 61 in the inserting direction of the hose body. At this time, since the diameter of the sleeve 3 is contracted, the sleeve projections 33 bite into the hose body B to keep the hose body B from coming off, while simultaneously compressing the hose body B and the O-ring 61 to implement water shut-off. To allow the sleeve 3 to move in the axial direction, while inhibiting a phenomenon in which the sleeve 3 tilts inside the nut 2 when the spring 4 presses the sleeve 3, the inner face of the nut 2 is guided with the outer peripheral surface of the ring 5. In other words, the movement is stabilized by using the inner face of the nut 2 and the parallel face of the outer peripheral surface of the ring 5. By establishing positional relations such that the O-ring 61 is present between the sleeve projections 33 when the sleeve projections 33 are located above the far-side O-ring 61 in the inserting direction of hose body, even if the tilt of the sleeve 3 or the like occurs, it is possible to compress the hose body B and the O-ring 61 and allow water shut-off. In a case of positional relations such that the O-ring 61 is not present between the sleeve projections 33, when the tilt of the sleeve 3 occurs, the hose body B and the O-ring 61 may not be able to be appropriately compressed, which results in insufficient water shut-off and causes fluid leakage. When a pressure is placed in the hose body B, a force to pull out the hose body B from the joint is exerted to be combined with the spring force of the spring 4, and the hose body B and the sleeve 3 are simultaneously moved in the hose pullout direction U. Figs. 5(b) to 5(e) and Figs. 6(b) to 6(e) stepwise illustrate the hose body B and the sleeve 3 each moving about 1 mm at a time toward the rear side in the inserting direction of the hose body after the completion of the inserting of the hose body B. Since the sleeve projections 33 have bitten into the hose body B, the hose body B and the sleeve 3 integrally move. At this time, the contact between the nut inner slope surface 21 and the sleeve slope surface 32 further contracts the diameter of the sleeve 3 and strengthens the biting of the sleeve projections 33 into the hose body B to reliably keep the hose body B from coming off and simultaneously enhance a force to compress the hose body B and the O-ring 61, thereby implementing water shut-off. Under a relatively low pressure, water shut-off is implemented by the far-side O-ring 61 in the inserting direction of the hose body (see Figs. 6(a), and 6(b)) and, as the pressure increases, the hose body B moves to contract the diameter of the sleeve 3 and simultaneously implement water shut-off by using the rear side O-ring 62 in the inserting direction of the hose body (see Fig. 6(e)). It is also possible to increase the number of the sleeve projections 33, the number of the O-rings 6 (i.e., the O-rings 61 and 62), and an area of the elastic bodies of the O-rings 6, but it is necessary to set the number of the O-rings 6 and the area thereof in consideration of the fact that, while the hose body B needs to move above the O-rings 6 when a pressure is placed on the hose body B, when frictional resistance between the hose body B and the O-rings 6 and frictional resistance between the sleeve slope surface 32 and the nut inner slope surface 21 increase, the hose body B does not smoothly move, the diameter of the sleeve 3 is also not contracted, and consequently it is difficult to implement water shut-off.

### (Another Embodiment)

Figs. 7 are longitudinal cross-sectional front view each illustrating an overall configuration of the hose joint according to another embodiment of the present invention, in which Fig. 7(a) illustrates the sleeve having a contracted diameter when connection of the hose body is completed and Fig. 7(b) illustrates a state where the hose body is not inserted. Meanwhile, Figs. 8 illustrate the sleeve to be used for the hose joint according to the other embodiment of the present invention, in which Fig. 8(a) is a front view, Fig. 8(b) is a left perspective view, and Fig. 8(c) is a longitudinal cross-sectional front view.

The nipple 1, the nut 2, and the components thereof and configurations of the spring 4, the ring 5, and the O-rings 6 are exactly the same as those in the first embodiment, and only a configuration of a sleeve 3' is different from the configuration in the first embodiment. That is, the sleeve 3' has a cylindrical intermediate part and, at both ends thereof, elastic deforming parts that cause elastic diameter expansion and contraction deformation of the sleeve 3' in a radial direction thereof are provided. However, the sleeve 3' is similar to the sleeve 3 in that the sleeve 3' extends further than the nut 2 in the hose pullout direction U opposite to the nipple 1 and the extending part has an expanded diameter in a normal state, and therefore this part can be used as a pressing part 31'.

The sleeve 3' described above can be assembled from any side of the nut 2, and can therefore improve productivity.

Additionally, it is also possible to improve sleeve replaceability. As described previously, the sleeve is a consumable part that deteriorates over time with use and needs to be replaced. When replacement is required, by temporarily detaching the sleeve 3', inverting a direction thereof, and then inserting the sleeve 3' in the nut 2 again, the same effect as that achieved by the replacement can be obtained. A reversible structure has such an advantage.

While the hose joint according to each of the embodiments of the present invention has been described in detail with reference to the drawings and the configuration thereof has been described, a specific configuration is not limited to that in the embodiment and, even when there is a design change or the like within a scope not departing from the gist of the present invention, the design change or the like is included in the present invention. For example, in the embodiment of the present invention, the description has been given of the water shut-off structure applied to the hose joint that also allows the hose body to be pulled out, but it is also useful to apply the water shut-off structure to the conventional type of hose joint in which the sleeve is completely contained in the hose joint. Even in the conventional type of hose joint, simultaneous movement of the hose body and the sleeve may cause a phenomenon such that a positional relationship between the water shut-off member and the sleeve projections deviates from appropriate positions, and therefore it is considerably significant to prepare a plurality of the water shut-off members from the far side to the rear side in the inserting direction of the hose body and appropriately set the positional relationship with the sleeve projections. Besides, the tightening member is formed of the nut attached by screwing to the nipple, but it is also possible to make a change in such a manner as to detachably connect the tightening member to the nipple or integrally fix the tightening member to the nipple by welding or the like without screwing. In the present invention, the sleeve can be pulled out and inserted in a state where the hose joint is assembled, and therefore, even when the nipple and the tightening member are welded together, there is no inconvenience.

### [Reference Signs List]

- 1: Nipple
- 11: Connection part
- 12: Tool engaging part
- 13: Cylindrical part
- 14: Guide part
- 15: Annular concave part
- 16: Hose butting part
- 17: Ring escaping part (escaping part)
- 2: Nut (tightening member)
- 21: Nut inner slope surface (tapered surface)
- 3: Sleeve
- 31: Pressing part
- 32: Sleeve slope surface
- 33: Sleeve projection
- 4: Spring
- 5: Ring
- 6: O-ring (water shut-off member)
- 61: Far-side O-ring in inserting direction of hose body (water shut-off member)
- 62: Rear side O-ring in inserting direction of hose body (water shut-off member)
- 3': Sleeve
- 31': Pressing part
- 32': Sleeve slope surface
- 33': Sleeve projection
- N: Inserting direction of hose body (hose inserting direction)
- U: Direction opposite to inserting direction of hose body (hose pullout direction)

## Claims

1. A hose joint comprising:
a guide part provided in a nipple and provided to face an inner surface of a hose body having flexibility;
a tightening member having a tapered surface provided to face an outer peripheral surface of the guide part and have a diameter which gradually becomes larger in an inserting direction of the hose body;
a sleeve provided to be reciprocatable in each of the inserting direction of the hose body and an opposite hose pullout direction along the tightening member and be capable of elastic diameter expansion/contraction deformation in a radial direction; and
an elastic member provided so as to press the sleeve in the hose pullout direction along the tapered surface, wherein
the sleeve has a sleeve projection that bites into an outer surface of the hose body when a diameter of the sleeve is contracted,
the guide part has a plurality of water shut-off members arranged from a far side to a rear side in the inserting direction of the hose body,
the sleeve projection is disposed above the water shut-off member on the far side in the inserting direction of the hose body when connection of the hose body is completed, while being disposed above the water shut-off member on the rear side in the inserting direction of the hose body when an internal pressure of the hose body is high.

2. The hose joint according to claim 1, wherein the sleeve has an extending part extending further than the tightening member in the hose pullout direction opposite to the inserting direction of the hose body, and the extending part functions as a pressing part for performing a pressing operation on the sleeve in the inserting direction of the hose body so as to expand the diameter thereof when the hose body, the insertion of which has been completed, is pulled out.
